Europäisches Patentamt

**European Patent Office**

**Office européen des brevets**

(11) Veröffentlichungsnummer: **0 301 386**
**A2**

(12) **EUROPÄISCHE PATENTANMELDUNG**

(21) Anmeldenummer: **88111623.0**

(51) Int. Cl.4: **H02M 3/335**

(22) Anmeldetag: **19.07.88**

(30) Priorität: **30.07.87 DE 3725304**

(43) Veröffentlichungstag der Anmeldung:
**01.02.89 Patentblatt 89/05**

(84) Benannte Vertragsstaaten:
**AT BE CH DE ES FR GB IT LI NL SE**

(71) Anmelder: **Siemens Aktiengesellschaft Berlin und München**
**Wittelsbacherplatz 2**
**D-8000 München 2(DE)**

(72) Erfinder: **Ney, Janusz, Dipl.-Ing.**
**Kapellenstrasse 8**
**D-8939 Igling(DE)**

(54) **Schaltnetzteil.**

(57) Das Schaltnetzteil arbeitet nach dem Sperrwandler-Prinzip und enthält einen primärseitigen Regelkreis, bei dem die Versorgungsspannung des Regelbausteins (N) aus einem parallel zur Gleichspannungsquelle liegenden Spannungsteiler mit den Widerständen (R1, R2, R3) abgezweigt wird. Das Schaltnetzteil ist gekennzeichnet durch eine Einschalt-Steuerschaltung mit einem ersten Steuer-Schalttransistor (STI), der eingangsseitig über ein Zeitglied (C3, R4, R5) am Meßstromkreis angekoppelt ist und durch einen vom ersten Steuer-Schalttransistor (ST1) gesteuerten zweiten Steuer-Schalttransistor (ST2), der in Serie zum ersten Widerstand (R1) des Spannungsteilers (R1, R2, R3) geschaltet ist.

**FIG 2**

Xerox Copy Centre

EP 0 301 386 A2

## Schaltnetzteil

Die Erfindung betrifft ein Schaltnetzteil nach den Merkmalen des Oberbegriffs des Patentanspruchs 1.

Bei derartigen Schaltnetzteilen wird der Regelbaustein in der Einschaltphase von der gleichgerichteten Netzspannung gespeist, während nach der Einschaltphase die Speisespannung über den Meßstromkreis zugeführt wird. Eine derartige Maßnahme ist bei Stromversorgungen, die für relativ enge Netzspannungstoleranzen vorgesehen sind, weitgehend problemlos, bereitet aber bei Weitbereichs-Stromversorgungen mit Netzspannungsbeeichen zwischen zum Beispiel 95 bis 265 V erhebliche Schwierigkeiten. Der Grund liegt in der notwendigen Anpassung der Widerstände für den Spannungsteiler, an dem die Speisespannung für den Regelbaustein abgegriffen wird. Diese Widerstände sollten nämlich so bemessen sein, daß der aus dem Netzgleichrichter über den ersten Spannungsteilerwiderstand fließende Stromanteil, der durch die beiden parallel zum Regelbaustein liegenden Spannungsteilerwiderstände fließt, während des Normalbetriebs der Stromversorgung möglichst klein ist, weil sonst die Regelverhältnisse gestört werden. Andererseits soll der Wert des ersten Spannungsteilerwiderstandes so klein wie möglich sein, um das Einschalten der Stromversorgung bei an der unteren Toleranzgrenze liegenden Netzspannungswerten zu gewährleisten.

Der vorliegenden Erfindung liegt nun die Aufgabe zugrunde, ein Schaltnetzteil der im Oberbegriff des Patentanspruchs 1 angegebenen Art so zu verbessern, daß auch bei einer Weitbereichsstromversorgung ein störungsfreier Betrieb, insbesondere eine ausreichende Kurzschlußfestigkeit gewährleistet ist.

Die Lösung dieser Aufgabe ergibt sich erfindungsgemäß durch die kennzeichnenden Merkmale des Patentanspruchs 1. Der damit erzielbare wesentliche Vorteil besteht darin, daß der erste Spannungsteilerwiderstand nur während der Einschaltphase eingeschaltet ist und damit im Dauerbetrieb der Stromversorgung keinerlei Wärmeverluste bringt. Da dieser Spannungsteilerwiderstand nur sehr kurz wirksam ist, kann er hinsichtlich seiner Leistung kleiner gewählt werden. Darüber hinaus kann auch der Widerstandswert dieses ersten Spannungsteilerwiderstandes verkleinert werden, so daß sich insgesamt eine kürzere Einschaltzeit für die Stromversorgung ergibt.

Die Erfindung und die mit ihr erzielbaren weiteren Vorteile werden im folgenden anhand eines in der Zeichnung dargestellten Ausführungsbeispiels näher erläutert. Dabei zeigen:

FIG 1 ein bekanntes Schaltnetzteil nach dem Sperrwandlerprinzip mit primärseitiger Regelsschaltung

FIG 2 das Schaltnetzteil gemäß FIG 1 mit einer erfindungsgemäß ausgebildeten Zusatzschaltung.

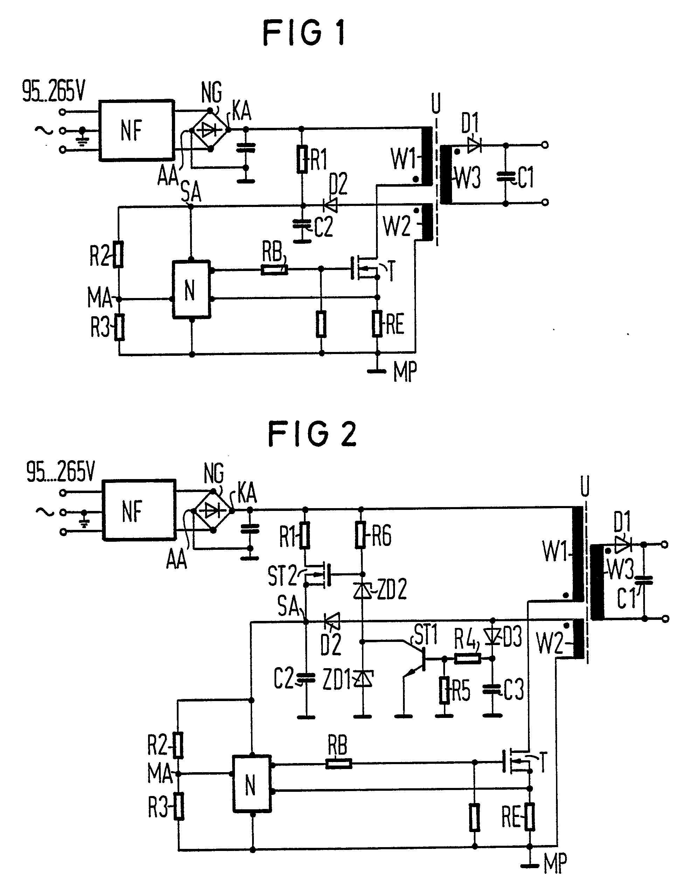

Die in FiG 1 dargestellte Schaltung für ein Sperrwandler-Schaltnetzteil besteht aus einem Netzgleichrichter NG, aus einem Übertrager U mit einer Wicklung W1 für den Primärkreis, einer Wicklung W2 für einen primärseitigen Regelkreis und einer Wicklung W3 für den Sekundärkreis, sowie aus einem Regelbaustein N zur Regelung des im Primärkreis liegenden Schalttransistors T. Der Primärstromkreis des Schaltnetzteils führt ausgehend vom Kathodenausgang KA des Netzgleichrichters NG über die Wicklung W1 zum Schalttransistor T und über dessen Emitterwiderstand RE zum Massepotential MP, an dem auch der Anodenausgang AA des Netzgleichrichters NG liegt. Im Sekundärkreis mit der Wicklung W3 ist eine im Längszweig liegende Diode D1 und eine Querkapazität C1 vorgesehen.

Zur Erzeugung der Versorgungsspannung für den Regelbaustein N ist ein parallel zum Netzgleichrichter-Ausgang liegender Spannungsteiler, bestehend aus drei Widerständen R1, R2, R3 vorgesehen, wobei der parallel zum massebezogenen Zweig mit den Widerständen R2 und R3 liegende Regelbaustein N an dem zwischen den Widerständen R1 und R2 liegenden Spannungsteilerabgriff SA angeschlossen ist. Ein Meßabgriff MA zwischen dem zweiten und dritten Spannungsteilerwiderstand R2 und R3 ist mit dem Spannungsfühlereingang der Regelschaltung N verbunden.

Der Meßstromkreis wird dadurch gebildet, daß ein Ende der zweiten Wicklung W2 des Übertragers U auf Massepotential MP liegt, während das andere Ende über eine Diode D2 an den Spannungsteilerabgriff SA angeschlossen ist. Der Regelbaustein N hat im wesentlichen die Funktion, den Spannungswert am Spannungsfühlereingang mit dem Wert einer internen Referenzspannung zu vergleichen und abhängig davon den Schalttransistor T so anzusteuern, daß bei einer vorhandenen Abweichung der Wert am Spannungsfühlereingang möglichst schnell korrigiert wird. Dies geschieht durch Verändern der Durchschaltzeiten des Schalttransistors T und der daraus resultierenden Änderung der Induktionswirkung im Übertrager U, die zu einer Erhöhung bzw. Erniedrigung der im Sekundärstromkreis und im Meßstromkreis induzierten Spannungen führt. Die Spannung am Meßabgriff MA setzt sich zusammen aus der durch den Spannungsteiler voreingestellten Spannung und der in der zweiten Wicklung W2 induzierten Spannung. Der Ausgang des Regelbausteines N ist über einen Vorwiderstand RB auf den Basisanschluß des Schalttransistors T geführt.

Die Funktion der Schaltungsanordnung nach FIG 1 ergibt sich wie folgt. Beim Einschalten wird der Regelbaustein N über den ersten Spannungsteilerwiderstand R1 von der gleichgerichteten Netzspannung des Netzgleichrichters NG gespeist, während er nach der Einschaltphase aus dem Meßstromkreis über die Diode D2 mit Speisespannung versorgt wird. Die Widerstandswerte für die Spannungsteiler-Widerstände R1, R2 und R3 sollen so bemessen werden, daß der Stromanteil des Widerstandes R1, der durch die beiden Widerstände R2 und R3 fließt, im Betrieb der Stromversorgung möglichst gering ist, weil sonst die Regelverhältnisse gestört werden. Andererseits soll der Widerstandswert des ersten Spannungsteiler-Widerstnades R1 so klein sein, daß auch bei der unteren Toleranzgrenze der Netzspannung ein Einschalten der Stromversorgung möglich ist. Eine optimale Anpassung der Spannungsteiler-Widerstände R1, R2 und R3 bereitet jedoch bei Stromversorgungen mit großen Netzspannungsbereichen erhebliche Probleme. Große Netzspannungsbereiche erweisen sich aber auch noch in anderer Hinsicht als nachteilig. So ist beispielsweise die Einschaltzeit der Stromversorgung abhängig von der Zeitkonstante des Widerstandes R1 und der zwischen dem Spannungsteilerabgriff SA und Massepotential MP liegenden Kapazitätz C2 abhängig, derart, daß die Einschaltzeit bei einem unteren Netzspannungswert länger wird als bei einer oberen Netzspannungsgrenze, weil die Spannung am Kondensator C2 stets einen ausreichenden Pegel für den Regelbaustein N erreichen muß. Da der Widerstand R1 im wesentlichen nur während der Einschaltphase benötigt wird, führt er im weiteren Betrieb zu unnötigen Leistungsverlusten und erhöht damit die Bauelementetemperatur insbesondere bei der oberen Netzspannungsgrenze. Weitere Probleme ergeben sich beim Kurzschlußfall an der Sekundärseite, weil dann der Regelbaustein N periodische Einschaltversuche macht, wobei die Wiederholungszeit ähnlich wie die Einschaltzeit von der jeweiligen Netzspannung abhängig ist. Eine zu kurze Wiederholungszeit bei einer oberen Netzspannungsgrenze kann nämlich zu einer Überlastung der Diode D2 im Sekundärkreis führen. Andererseits begrenzt eine Erhöhung des Widerstandswertes für den Spannungsteilerwiderstand R1 wieder die untere Netzspannungsgrenze.

Die in FIG 2 gezeigte Schaltung unterscheidet sich von der Schaltung nach FIG 1 durch eine Zusatzschaltung, die den genannten Schwierigkeiten in einfacher Weise begegnet. Diese Zusatzschaltung besteht aus einem über eine Diode D3 und einem aus einer Querkapazität C3, einem Längswiderstand R4 und einem Querwiderstand R5 bestehenden Zeitglied angekoppelten ersten Steuer-Schalttransistor ST1 und einem vom ersten Steuer-Schalttransistor ST1 gesteuerten zweiten Steuer-Schalttransistor ST2, der in Serie zum ersten Widerstand R1 des Spannungsteilers geschaltet ist. Zwischen den beiden Steuer-Schalttransistoren ST1, ST2 ist ein aus zwei Zenerdioden ZD1, ZD2 und einem Widerstand R6 bestehender Spannungsteiler vorgesehen, wobei der Ausgang des Steuer-Schalttransistors ST1 mit dem Abgriff zwischen den beiden Zenerdioden ZD1, ZD2 und der Eingang des zweiten Steuer-Schalttransistors ST2 mit dem Abgriff zwischen der zweiten Zenerdiode ZD2 und dem Widerstand R6 verbunden ist. Das andere Ende des Widerstandes R6 ist mit dem am Kathodenausgang KA liegenden Ende der Wicklung W1 des Übertragers U verbunden. Durch diese Zusatzschaltung ergibt sich folgende Änderung in der Funktion der Schaltung. Beim Einschalten ist der zweite Steuer-Schalttransistor ST2 zunächst leitend, während der erste Steuer-Schalttransistor ST1 gesperrt ist. Der Kondensator C2 wird durch den Widerstand R1 aufgeladen und ab einem bestimmten Spannungspegel beginnt der Regelbaustein N, den im Primärkreis liegenden Schalttransistor T des Schaltnetzteiles anzusteuern. Nach der Einschaltphase wird der erste Steuer-Schalttransistor ST1 leitend und demzufolge der zweite Steuer-Schalttransistor ST2 gesperrt.

Im Kurzschlußfall wird aufgrund des Spannungsabfalls am Emitterwiderstand RE die Ansteuerung für den Schalttransistor T ausgeschaltet und damit sowohl die Ausgangsspannung als auch die Speisespannung für den Regelbaustein N unterbrochen. Der erste Steuer-Schalttransistor ST1 wird wieder leitend und der zweite Steuer-Transistor ST2 gesperrt. Nach einer durch das Zeitglied C3, R4, R5 vorgegebenen Zeitkonstante erreicht die am Kondensator C3 abfallende Spannung den Sperrwert. Der erste Steuer-Schalttransistor ST1 wird wieder gesperrt und der zweite Steuer-Schalttransistor ST2 leitend. Ab diesem Zeitpunkt beginnt die Anlaufphase der Stromversorgung ähnlich wie bei der Schaltung nach FiG 1.

Mit Hilfe der in FIG 2 vorgesehenen Zusatzschaltung ergeben sich bei einer Weitbereichs-Stromversorgung folgende wesentliche Vorteile:

- Der Spannungsteilerwiderstand-R1 ist nur in der Einschaltphase eingeschaltet, bringt also im laufenden Betrieb der Stromversorgung keine zusätzlichen Wärmeverluste.

- In Anbetracht der nur kurzen Arbeitsphase kann die Leistung des Widerstandes R1 kleiner sein.

- Da der erste Spannungsteiler-Widererstand R1 nur kurz eingeschaltet ist, kann sein Widerstandswert verkleinert und damit die Einschaltzeit der Stromversorgung verkürzt werden.

- Im Kurzschlußfall ist nach Abschalten der Stromversorgung die Pause bis zum Wiedereinschalten nur von der Zeitkonstante des dem ersten Steuer-Schalttransistor ST1 vorgeschalteten Zeitgliedes abhängig. Die Abschaltpause der Stromversorgung nach dem Kurzschluß läßt sich so bestimmen, daß keine Bauteile im Dauerkurzschlußfall wie bei der oberen Netzspannungsgrenze überbelastet werden.

- Daraus resultiert insgesamt eine erhöhte Betriebszuverlässigkeit des gesamten Schaltnetzteils.

Bezugszeichenliste

| | |
|---|---|
| NG | Netzgleichrichter |
| U | Übertrager |
| W1 | Wicklung im Primärkreis |
| W2 | Wicklung für den primärseitigen Regelkreis |
| W3 | Wicklung im Sekundärkreis |
| N | Regelbaustein |
| T | Schalttransistor |
| KA | Kathodenausgang |
| RE | Emitterwiderstand |
| MP | Massepotential |
| AA | Anodenausgang |
| D1 | Diode |
| C1 | Querkapazität |
| R1, R2, R3 | Widerstände eines Spannungsteilers |
| MA | Meßabgriff |
| D2 | Diode |
| SA | Spannungsteilerabgriff |
| RB | Vorwiderstand |
| C2 | Kapazität |
| D3 | Diode |
| C3 | Querkapazität |
| R4 | Längswiderstand |
| R5 | Querwiderstand |
| ST1, ST2 | Steuer- Schalttransistoren |
| ZD1, ZD2 | Zenerdioden |
| R6 | Widerstand |

Ansprüche

1. Schaltnetzteil, bestehend aus einem Übertrager (U) mit einem von einer Gleichspannungsquelle und einem Schalttransistor (T) gebildeten Primärstromkreis, einem mindestens einen Verbraucher enthaltenden Sekundärstromkreis und einem Meßstromkreis für eine den Schalttransistor (T) ansteuernde Regelschaltung (N), deren Versorgungsspannung an einem Abgriff (SA) eines parallel zur Gleichspannungsquelle liegenden, aus einem ersten, zweiten und dritten Widerstand (R1, R2, R3) gebildeten Spannungsteilers abgezweigt wird, wobei der zweite und dritte Widerstand (R2, R3) im massebezogenen Zweig des Spannungsteilers parallel zur Regelschaltung (N) geschaltet sind, gekennzeichnet durch eine Einschalt-Steuerschaltung mit einem ersten Steuer-Schalttransistor (ST1), der eingangsseitig über ein Zeitglied (C3, R4, R5) am Meßstromkreis angekoppelt ist und durch einen vom ersten Steuer-Schalttransistor (ST1) gesteuerten zweiten Steuer-Schalttransistor (ST2), der in Serie zum ersten Widerstand (R1) des Spannungsteilers (R1, R2, R3) geschaltet ist.

2. Schaltnetzteil nach Anspruch 1, dadurch gekennzeichnet, daß zwischen dem ersten und zweiten Steuer-Schalttransistor (ST1, ST2) ein aus zwei Zenerdioden (ZD1, ZD2) und einem Widerstand (R6) bestehender Spannungsteiler derart eingeschaltet ist, daß der Ausgang des ersten Steuer-Schalttransistors (ST1) mit dem Abgriff zwischen den beiden Zenerdioden (ZD1, ZD2) und der Eingang des zweiten Steuer-Schalttransistors (ST2) mit dem Abgriff zwischen der zweiten Zenerdiode (ZD2) und dem Widerstand (R6) verbunden ist.

# FIG 1

# FIG 2